# EUROPÄISCHE PATENTANMELDUNG

(11) **EP 4 001 372 A1**
(43) Veröffentlichungstag der Anmeldung: **25.05.2022**
(21) Anmeldenummer: 20209504.8
(22) Anmeldetag: 24.11.2020
(51) Int. Cl.: C09D 175/04, C09D 5/02, B05B 1/00, B05D 1/02, C09D 7/20, C09D 7/41, C09D 7/44, C09D 7/65

(54) **WASSERBASIERTE DECKLACKE**

(71) Anmelder: Technology & Marketing Consulting GmbH, 47198 Duisburg (DE)
(72) Erfinder: Kother, Frank, 47198 Duisburg (DE)
(74) Vertreter: Fabry, Bernd

(57) **Zusammenfassung**

Vorgeschlagen werden wasserbasierte Decklacke, die in konkreten Mengen Kunststoffdispersionen, Dispergiermittel, Rheologiehilfsmittel, Entschäumer, Farbpigmente, sowie Lösungsmittel enthalten.

## Beschreibung

### Gebiet der Erfindung

Die Erfindung befindet sich auf dem Gebiet der Lacke und Farben und betrifft eine sprühbare wässrige Decklackzubereitung sowie einen damit hergestellten Spritzlack.

### Technologischer Hintergrund

Lack ist der Oberbegriff für flüssige oder auch pulverförmige Beschichtungsstoffe, die dünn auf Gegenstände aufgetragen und durch chemische oder physikalische Vorgänge (zum Beispiel Verdampfen des Lösungsmittels) zu einem durchgehenden, festen Film aufgebaut werden. Ein Lack besteht aus flüchtigen Lösemitteln und nichtflüchtigen Bestandteilen. Das Lösemittel (der flüchtige Bestandteil) verdunstet während des Trocknungsprozesses, die nichtflüchtigen Bestandteile haften dabei als glatter Film auf dem lackierten Objekt. Die nicht flüchtigen Komponenten sind Bindemittel, Pigmente, Öle, Harze, Füllstoffe und Additive. Das Bindemittel sorgt für eine gute, gleichförmige Suspension mit Pigmenten und Lösemittel im Lack, ist für einen optimalen Trocknungsprozess (keine Blasenbildung) und für den Glanz nach der Trocknung verantwortlich.

Spritzfähige Lacke, die aus einem unter Druck stehenden Behälter mit Hilfe einer Düse zu Aerosolen vernebelt und dann auf die zu färbende Fläche appliziert werden, können flüchtige organische Lösungsmittel enthalten oder wasserbasiert sein. Mit organischen Systemen lassen sich bei Aerosol-Zerstäubung im Allgemeinen feinere Nebel erzeugen und daraus folgend glattere, glänzendere und optisch ansprechendere Überzüge herstellen. Allerdings können diese Produkte sowohl aus ökologischer wie auch toxikologischer Sicht bedenklich sein.

Spritzfähige Wasserlacke nach dem Stand der Technik weisen jedoch eine Reihe von anderen Nachteilen auf: das Tropfenbild bei der Aerosolzerstäubung ist nicht fein, sondern eher grob, die Lacknebeltropfen verlaufen schlecht auf dem Untergrund, zwischen den einzelnen Lackaufträgen muss über eine längere Zeit gelüftet werden. Die Lackanteile können aufgrund ihrer Chemisch-physikalischen Natur nur mehr mit einer geringeren, enger begrenzten Menge an Treibmittel (typischerweise maximal 40 Gew.-%) beaufschlagt werden. Im Falle höherer Treibmittelmengen lassen sich mit Wasserlacken aufgrund von Schaumbildung oder Stabilitätsproblemen keine markttauglichen Überzüge herstellen.

Anders bei den oben genannten organisch gelösten Systeme sind Treibmittel-Zugaben von 50 Gew% und mehr möglich und marktüblich, mit den daraus folgenden Vorteilen für Verneblung des Flüssiglackes und der Oberflächengüte der daraus hergestellten Überzüge.

### Relevanter Stand der Technik

Aus der WO 2004 009225 A1 (MASTON) ist ein Verfahren zur Prüfung der gegenseitigen Kombinierbarkeit von Beschichtungsmaterial und Treibmittel und zur Herstellung einer Aerosol-Farbzusammensetzung auf Wasserbasis mit einer hohen Konzentration an Beschichtungsmaterial bekannt.

### Aufgabe der Erfindung

Die Aufgabe der vorliegenden Erfindung hat daher darin bestanden, eine sprühbare Lackzubereitung auf Wasserbasis zur Verfügung zu stellen, die die geschilderten Nachteile des Stands der Technik überwindet und die insbesondere die Vorteile lösungsmittelhaltiger Spritzlacke aufweist, ohne gleichzeitig deren Nachteile zu besitzen.

### Beschreibung der Erfindung

Ein erster Gegenstand der Erfindung betrifft wasserbasierte Decklacke, enthaltend oder bestehend aus
(a) etwa 70 bis etwa 90 Gew.-% Kunststoffdispersionen;
(b) etwa 1 bis etwa 5 Gew.-% Dispergiermittel;
(c) etwa 1 bis etwa 5 Gew.-% Rheologiehilfsmittel;
(d) etwa 1 bis etwa 5 Gew.-% Entschäumer;
(d) etwa 1 bis etwa 20 Gew.-% Farbpigmente; sowie
(f) 0 bis etwa 30 Gew.-% Lösungsmittel
mit der Maßgabe, dass sich die Mengenangaben mit Wasser zu 100 Gew.-% ergänzen.

Überraschenderweise wurde gefunden, dass die erfindungsgemäßen Systeme sich in der Anwendung wie lösungsmittelbasierte Aerosol-Spritzlacke verhalten: Gegenüber den wasserbasierten Systemen des Stands der Technik weisen sie eine verbesserte Zerstäubung und Verspritzbarkeit auf. Es werden ein sehr viel feineres Spritzbild und ein schnellerer Verlauf der nassen Lackschichten ohne langes Zwischenlüften erhalten. Die Flächen zeigen ein schnelles Antrockenverhalten mit geringer Läuferneigung und nach Trocknung hohe optischer Güte (Glanz, Glätte). Es können die Zubereitungen mit deutlich mehr Treibgas beaufschlagt werden, was in der Folge zu den oben genannten Vorteilen führt. Ein weiteres Kennzeichen der erfindungsgemäßen Decklacke besteht darin, dass sie keine flüchtigen Kohlenwasserstoffe (VOC) aufweisen können.

### Kunststoffdispersionen

Als Kunststoffdispersionen kommen üblicherweise wasser- oder ölbasierte Polyacrylat, Epoxid-, insbesondere aber Acrylat und Polyurethandispersionen in Frage. Dies sind sie beispielsweise von der Firma BASF unter den Handelsbezeichnungen Joncry. 8283 und Johncryl U 4190 erhältlich, aber auch von DSM (NeoPAC (R) 480 und Neopac 580), Celanese Höchst Mowilith oder von Alberdingk & Boley unter den Handelsbezeichnungen "AC", "U" sowie "LUR" und "CUR" erhältlich sind.

### Dispergiermittel

Dispergiermittel (auch *Dispergatoren*) sind Additive, die das Dispergieren, also die optimale Durchmischung von mindestens zwei, eigentlich nicht mischbaren Phasen ermöglichen oder stabilisieren. Dazu gehören die Bildung von Emulsionen und besonders der Suspensionen, die beide zu den sogenannten Dispersionen zählen. Während Emulsionen eine feine Durchmischung zweier Flüssigkeiten, wie beispielsweise Öl und Wasser sind, handelt es sich bei einer Suspension um eine genügend stabile Aufschwemmung von sehr kleinen Feststoffen wie im Falle der Erfindung von Farbpigmenten.

Dispergatoren können unterschiedlichste chemische Strukturen aufweisen. Vorzugsweise handelt es sich jedoch um Polymere, insbesondere mit Polyester, Polyamine, Polyamide und Polyurethane sowie deren entsprechenden Copolymeren, die mit weiteren funktionellen Gruppen wie z.B. quartären Ammonium oder Phosphatfunktionen derivatisiert sein können. Entsprechende Produkte sind beispielsweise unter der Marke CliqSperse^{®} mit den Typenbezeichnungen BA, BF, BL, BG, BT, CA, HA, HK, 131 oder PH-2 (Cliq SwissTech AG) im Handel erhältlich. Besonders geeignet sind Dispergatoren auf Polyglycolether-Basis, derivatisiert beispielsweise mit Carbonsäure- oder Phosphorsäurefunktionen, wie z.B. CliqSperse^{®} 123 bis 181 (Cliq SwissTech AG). Ebenfalls sind vergleichbare Produkte unter dem Namen Disperbyk der Firma BYK_Chemie, Tego Disperse der Fa. Evonik oder Dispex der Firma BASF erhältich.

### Rheologiehilfsmittel

Rheologiehilfsmittel beeinflussen das Fließverhalten von Pasten und Flüssigkeiten. Im Sinne der vorliegenden Erfindung handelt es sich dabei im Wesentlichen um Verdickungsmittel, einschließlich Assoziativ-Verdickern, die dafür Sorge tragen, dass die Zubereitungen eine ausreichend niedrige Viskosität aufweisen, um gepumpt und versprüht zu werden, aber doch so dickflüssig sind, jedoch nach Aufbringung der Beschichtung auch an senkrechten Flächen nicht - der Schwerkraft folgend - ablaufen.

Ähnlich wie Dispergatoren sind auch Rheologiehilfsmittel in der Regel Polymere, wobei Kammpolymere besonders bevorzugt sind. Als besonders geeignet haben sich nichtionische Polyurethanverbindungen sowie Harnstoffurethane erwiesen, die unter der Bezeichnung Collacral PU 85, Borchigel (Borchers), Rheobyk (Byk Chemie) oder von Clique Swiss Tech AG als CliqFlow^{®} mit den Typenbezeichnungen 600 bis 690 im Handel sind.

### Entschäumer

Entschäumer oder Schaumbekämpfungsmittel sind chemische Stoffe oder Formulierungen mit ausgeprägter Grenzflächenaktivität, die geeignet sind, unerwünschte Schaumbildung zu unterdrücken oder bereits gebildeten Schaum zu zerstören. Häufig werden Mono- und Diglyceride von Speisefettsäuren sowie vor allem Siliconentschäumer und insbesondere Dimethylpolysiloxan eingesetzt. Weite Verbreitung finden sogenannte "Entschäumer-*Compounds"* aus Silikonölen und darin implementierten Kieselsäure-Partikeln. Hierbei handelt es sich um heterogene Entschäumer, da diese Systeme im schäumenden Medium unlöslich sind. Bevorzugt sind jedoch homogene Entschäumer, d. h. Entschäumer, die in der schäumenden Flotte gelöst vorliegen (z. B. so genannte *Trübungspunkt-Entschäumer*) aus der Klasse der Phosphorsäureester wie insbesondere Tri-*n*-butyl-phosphat und Triisobutylphosphat.

Für die Wirkung von Entschäumern auf die schäumende Systeme werden verschiedene Mechanismen diskutiert. Eine wichtige Rolle spielt dabei die Spreitung, als das Maß für die Fähigkeit von Ölen und ähnlichen Substanzen, sich flächig auszubreiten) eines in die Oberfläche einer Schaumlamelle eingedrungenen Entschäumer-Öltröpfchens. Der Einbau von z. B. Kieselsäure-Partikeln in Silikon-Entschäumer dient dabei dem Zweck, den Eintritt der dispergierten Öltröpfchen in die Grenzfläche Wasser/Luft zu beschleunigen bzw. überhaupt zu ermöglichen.

Als besonders wirksam haben sich beispielsweise polymere, mineralölfreie wässrige Entschäumersysteme gegebenenfalls auf Polyglycolether-Basis bewährt, die unter den Bezeichnungen Foamstar SI der Typennumern 2210, 2249 2213, 2292 (BASF), CliqSmart^{®} mit den Typennummern 111, 1014, 1015, 1031 oder 1032 oder deren Gemische (Cliq SwissTech AG) im Handel erhältlich sind. Ebenfalls bevorzugt sind Polysiloxanentschäumer der gleichen Firma wie etwa CliqSmart^{®} mit den Typenbezeichnungen 1052, 1061, 1062, AF, AP oder PD-20 sowie deren Gemische mit vergleichbaren Handelstypen anderer Hersteller.

### Farbpigmente

Im Sinne der vorliegenden Erfindung sind Farbpigmente als Farbmittel, also farbgebende Substanzen zu verstehen. Im Gegensatz zu Farbstoffen bestehen sie aus Teilchen und sind im Anwendungsmedium praktisch unlöslich. Geeignet sind sowohl anorganische Pigmente wie beispielsweise Oxide, Sulfate, Nitrate, Carbonate, Halogenide oder Phosphate sofern diese Wasserunlöslich oder zumindest wasserschwerlöslich sind (z.B. Bariumsulfat). Als Weißpigment steht Titandioxid im Vordergrund, Rottöne werden häufig mit Hilfe von Eisenoxiden erzeugt, während schwarz durch Ruß, also Kohlenstoff mit hoher Oberfläche erzeugt wird..

Daneben kommen auch organische Pigmente in Frage, wie beispielsweise Kochenillerot A (C.I. 16255), Patentblau V (C.I.42051), Indigotin (C.I.73015), Chlorophyllin (C.I.75810), Chinolingelb (C.I.47005), Indanthrenblau RS (C.I. 69800) Krapplack (C.I.58000) und dergleichen. Als Lumineszenz-Farbstoff kann auch Luminol enthalten sein.

Die Auswahl der Farbpigmente ist weitgehend unkritisch und richtet sich vornehmlich allein nach dem Farbton, der erzielt werden soll. Für andere Farborte werden entsprechend Pigmentdispersionen mit Pigmenten der üblichen Color Indices verwendet

### Lösungsmittel

Sofern neben Wasser noch weitere Lösungsmittel zugegen sind, sind diese wassermischbar. Besonders geeignet sind polare Lösungsmittel wie Ethylenglykol, Propylenglykol, Butylenglykol, Diethylenglykol, Triethylenglykol, Dipropylenglykol und deren Veresterungs- oder Veretherungsprodukte wie insbesondere Dipropylenglykolmethylether (DPM). Daneben können auch entsprechende Lösungsmittelgemische eingesetzt werden, welche auch weiterhin kurzkettige Alkohole wie Propanol, Butanol oder Glycerin mitenthalten können.

### Decklackzusammensetzungen

In einer bevorzugten Ausführungsform der vorliegenden Erfindung können die Decklacke
(a) etwa 75 bis etwa 85 Gew.-%, vorzugsweise etwa 60 bis etwa 70 Kunststoffdispersionen, insbesondere Polyurethandispersionen;
(b) etwa 2 bis etwa 3 Gew.-% Dispergiermittel;
(c) etwa 2 bis etwa 3 Gew.-% Rheologiehilfsmittel;
(d) etwa 2 bis etwa 3 Gew.-% Entschäumer, vorzugsweise Siliconentschäumer;
(d) etwa 2 bis etwa 10 Gew.-% Farbpigmente; sowie
(f) etwa 2 bis etwa 30 Gew.-% Lösungsmittel, vorzugsweise Dipropylenglykolmethylether; kurzkettige Alkohole oder deren Versterungs- oder Veretherungsprodukte.
mit der Maßgabe enthalten, dass sich die Mengenangaben mit Wasser zu 100 Gew.-% ergänzen.

### Spritzlacke

Die erfindungsgemäßen wasserbasierten Decklacke lassen sich versprühen, wobei die Aerosole besonders feine Nebel bilden, die dann das gewünschte feine Farbtropfenbild ergeben. Zur Formulierung der Spritzlacke werden die Decklacke daher mit mindestens einem Treibmittel beaufschlagt. Insbesondere enthalten oder bestehen die Spritzlacke aus
(i) etwa 54 bis etwa 80 Gew.-%, vorzugsweise etwa 55+ bis 65 Gew.-% wasserbasierten Decklack und
(ii) etwa 20 bis 50 Gew.-%, vorzugsweise etwa 35 bis 46 Gew.-% Treibmittel.

### Treibmittel

Als Treibmittel kommen vor allem Propan, Butan und Dimethylether in Betracht. Dabei kann das Gewichtsverhältnis zwischen dem Spritzlack und dem Treibmittel im Bereich von etwa 60:40 bis etwa 80:20 und insbesondere etwa 55:45 bis etwa 70:30 liegen.

### Gewerbliche Anwendbarkeit

Ein weiterer Gegenstand der Erfindung betrifft ferner ein Verfahren zur Herstellung eines Spritzlacks, umfassend die Schritte:
(a1) Bereitstellen des wasserbasierten Decklacks wie oben beschrieben;
(a2) Befüllen eines Druckcontainers mit Treibmittel; und
(a3) Aufdrücken der Mischung aus Schritt (a1) auf den befüllten Druckcontainer aus Schritt (a2)
oder
(b1) Bereitstellen des wasserbasierten Decklacks wie oben beschrieben;
(b2) Befüllen eines Druckcontainers mit der Mischung aus Schritt (b1) ; und
(b3) Aufdrücken des Treibmittels auf den befüllten Druckcontainer aus Schritt (b2).

Mit anderen Worten: Entweder legt man die Mischung aus den beiden Komponenten (a) und (b) im Druckcontainer vor und presst das Treibmittel auf oder umgekehrt. Grundsätzlich ist es auch möglich anstelle der Druckcontainer mechanische Pump- und Zerstäubersysteme einzusetzen.

Ein weiterer Gegenstand der Erfindung betrifft einen Druckcontainer enthaltend den wasserbasierten Decklack wie oben beschrieben. Dieser weist typisch bei 50 °C einen Druck von etwa 1,1 bis etwa 3,8 bar und vorzugsweise von etwa 2,5 bis etwa 3 bar auf. Ein Prüfen ist erforderlich.

Ein letzter Gegenstand der Erfindung betrifft Verwendung der wasserbasierten Decklacke oder der Spritzlacke wie jeweils oben beschrieben als sprühfähige Systeme zum Auftragen auf feste Oberflächen.

### BEISPIELE

### Beispiel 1

### Wässriger Decklack "Rot"

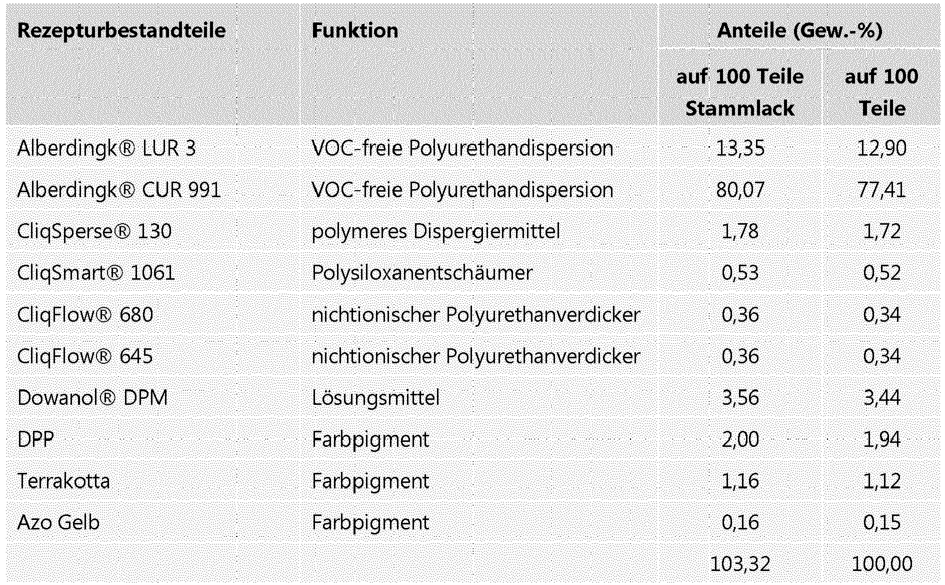

### Beispiel 2

### Wässriger Decklack "weiß"

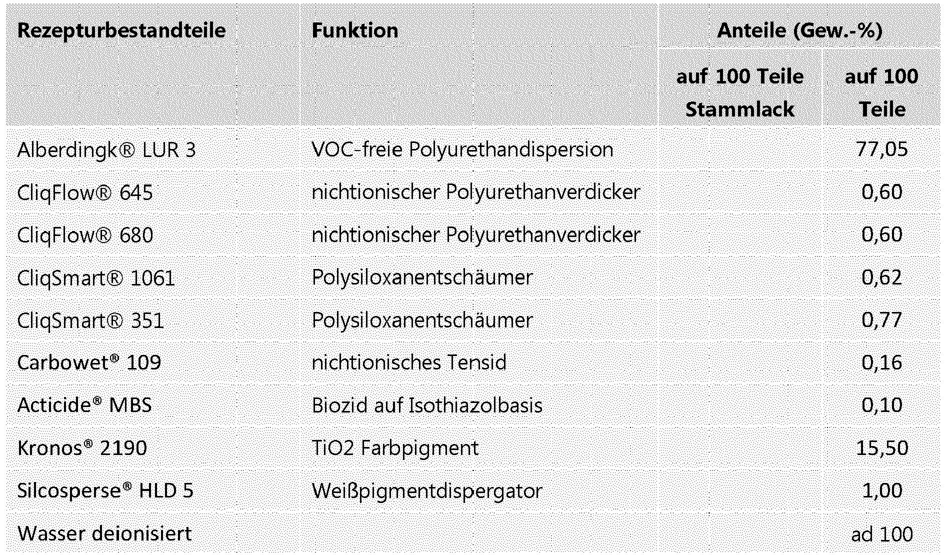

### Beispiel 3

### Wässriger Decklack "Marineblau"

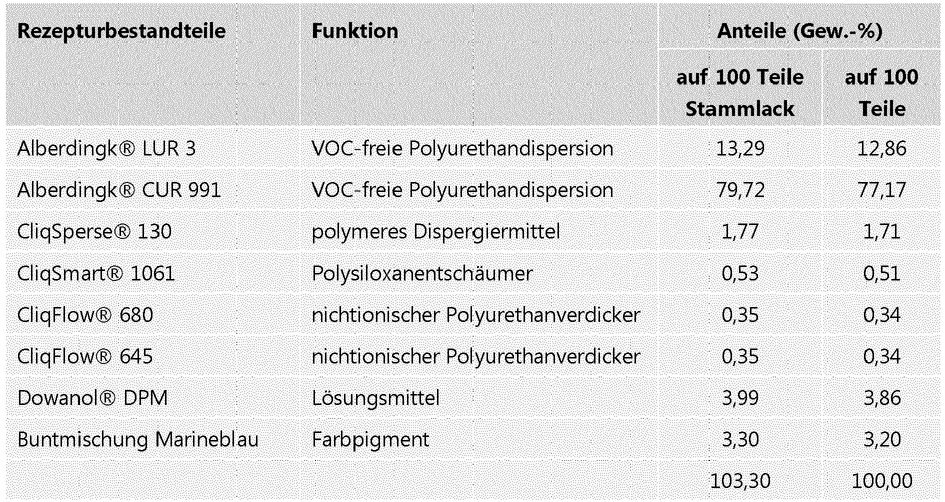

### Beispiel 4

### Wässriger Decklack "Schwarz"

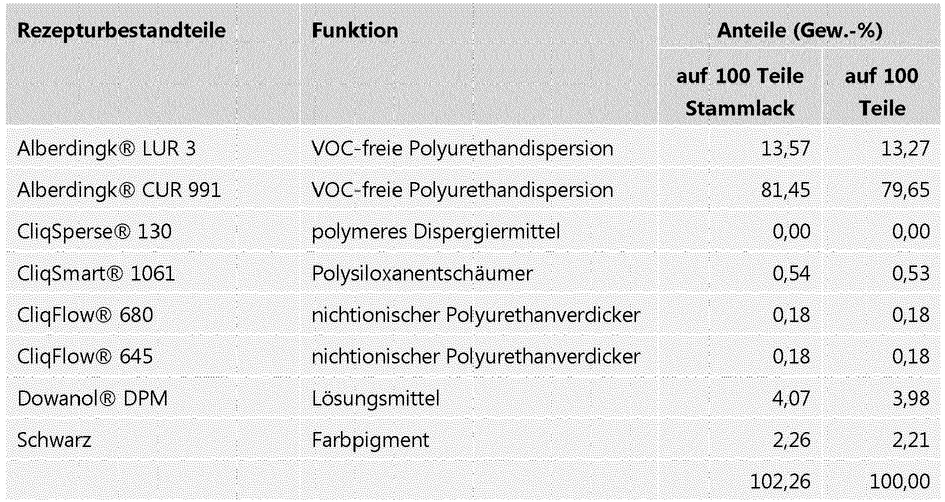

### Beispiel 5

### Spritzlack "Rot"

123 g der Decklackzusammensetzung aus Beispiel 1 wurden in einen konventionellen Druckcontainer gegeben und mit 100 g Treibmittel und 46 g Propanol beaufschlagt. Beim Versprühen wurde ein Vernebelungsbild erzeugt, das einem rein lösungsmittelhaltigen Vergleichsprodukt (Marke Avena) praktisch entsprach. Auch die besprühten Flächen trockneten schnell und gleichmäßig ab.

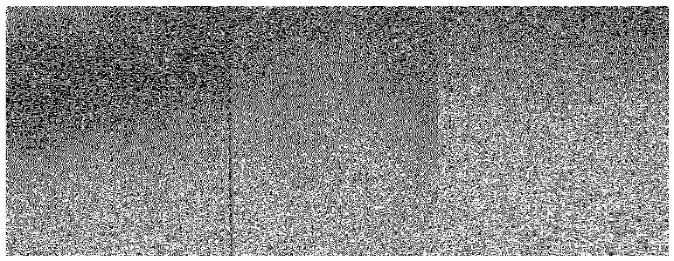

In der nachfolgenden **Abbildung 1** sind drei Bleche zu sehen, die mit unterschiedlichen Spritzlacken eingefärbt worden sind. Das Blech links wurde mit einem Spritzlack behandelt, welcher den Decklack gemäß Beispiel 1 enthielt. Die beiden anderen Bleche wurden mit Spritzlacken gemäß Stand der Technik behandelt. Das feinere Sprühbild zeigt der erfindungsgemäße Lack.

## Patentansprüche

1. Wasserbasierte Decklacke, enthaltend und/oder bestehend aus
(a) etwa 70 bis etwa 90 Gew.-% Kunststoffdispersionen;
(b) etwa 1 bis etwa 5 Gew.-% Dispergiermittel;
(c) etwa 1 bis etwa 5 Gew.-% Rheologiehilfsmittel;
(d) etwa 1 bis etwa 5 Gew.-% Entschäumer;
(d) etwa 1 bis etwa 20 Gew.-% Farbpigmente; sowie
(f) 0 bis etwa 30 Gew.-% Lösungsmittel
mit der Maßgabe, dass sich die Mengenangaben mit Wasser zu 100 Gew.-% ergänzen.

2. Decklacke nach Anspruch 1, **dadurch gekennzeichnet, dass** sie
(a) etwa 75 bis etwa 85 Gew.-% Kunststoffdispersionen;
(b) etwa 2 bis etwa 3 Gew.-% Dispergiermittel;
(c) etwa 2 bis etwa 3 Gew.-% Rheologiehilfsmittel;
(d) etwa 2 bis etwa 3 Gew.-% Entschäumer;
(d) etwa 2 bis etwa 10 Gew.-% Farbpigmente; sowie
(f) etwa 1 bis etwa 25 Gew.-% Lösungsmittel
mit der Maßgabe enthalten, dass sich die Mengenangaben mit Wasser zu 100 Gew.-% ergänzen.

3. Decklacke nach den Ansprüchen 1 und /oder 2, **dadurch gekennzeichnet, dass** die Kunststoffdispersionen Polyacrylat-, Epoxid- und/oder Polyurethandispersionen darstellen.

4. Decklacke nach mindestens einem der Ansprüche 1 bis 4, **dadurch gekennzeichnet, dass** die Dispergiermittel ausgewählt sind aus der Gruppe, die gebildet wird von Polyestern, Polyaminen, Polyamiden und Polyurethanen sowie deren entsprechenden Copolymeren, die gegebenenfalls weitere quartäre Ammonium- oder Phosphatfunktionen aufweisen können.

5. Decklacke nach mindestens einem der Ansprüche 1 bis 4, **dadurch gekennzeichnet, dass** die Rheologiehilfsmittel nichtionische Polyurethanverbindungen oder Harnstoffurethane darstellen.

6. Decklacke nach mindestens einem der Ansprüche 1 bis 5, **dadurch gekennzeichnet, dass** die Entschäumer Siliconentschäumer darstellen.

7. Decklacke nach mindestens einem der Ansprüche 1 bis 6, **dadurch gekennzeichnet, dass** die Farbpigmente anorganischer oder organischer Natur sind.

8. Decklacke nach mindestens einem der Ansprüche 1 bis 7, **dadurch gekennzeichnet, dass** die Lösungsmittel ausgewählt sind aus der Gruppe, die gebildet wird von Ethylenglykol, Propylenglykol, Butylenglykol, Diethylenglykol, Triethylenglykol, Dipropylenglykol, Dipropylenglykolmethylether, Ethanol, Butanol, Propanol, Hexanol, Glycerin und deren Gemischen.

9. Spritzlacke, umfassend oder bestehend aus
(i) einem wasserbasierten Decklack nach mindestens einem der Ansprüche 1 bis 8 und
(ii) mindestens einem Treibgas.

10. Spritzlacke nach Anspruch 9, **dadurch gekennzeichnet, dass** sie
(i) etwa 60 bis etwa 80 Gew.-% wasserbasierten Decklack und
(ii) etwa 20 bis 40 Gew.-% Treibmittel
enthalten.

11. Spritzlacke nach den Ansprüchen 8 und/oder 9, **dadurch gekennzeichnet, dass** das Treibmittel Propan, Butan, Dimethylether oder eine Mischung davon darstellt.

12. Verfahren zur Herstellung eines Spritzlacks, umfassend die Schritte:
(a1) Bereitstellen des wasserbasierten Decklacks wie oben beschrieben;
(a2) Befüllen eines Druckcontainers mit Treibmittel; und
(a3) Aufdrücken der Mischung aus Schritt (a1) auf den befüllten Druckcontainer aus Schritt (a2)
oder
(b1) Bereitstellen des wasserbasierten Decklacks wie oben beschrieben;
(b2) Befüllen eines Druckcontainers mit der Mischung aus Schritt (b1); und
(b3) Aufdrücken des Treibmittels auf den befüllten Druckcontainer aus Schritt (b2).

13. Druckcontainer enthaltend den Spritzlack nach mindestens einem der Ansprüche 9 bis 11.

14. Druckcontainer nach Anspruch 13, **dadurch gekennzeichnet, dass** dieser bei 50 °C einen Druck von 1,1 bis 3,8 bar aufweist.

15. Verwendung der wasserbasierten Decklacke nach mindestens einem der Ansprüche 1 bis 8 oder der Spritzlacke nach mindestens einem der Ansprüche 9 bis 11 als sprühfähige Systeme zum Auftragen auf feste Oberflächen.
